# EUROPÄISCHE PATENTSCHRIFT

(11) **EP 0 537 454 B1**
(45) Veröffentlichungstag und Bekanntmachung des Hinweises auf die Patenterteilung: **02.11.1995**
(21) Anmeldenummer: 92114716.1
(22) Anmeldetag: 28.08.1992
(51) Int. Cl.: B62D 1/19, B62D 1/18

(54) **Sicherheitsvorrichtung**
Safety device
Dispositif de sécurité

(30) Priorität: 14.10.1991 DE 4133960
(43) Veröffentlichungstag der Anmeldung: 21.04.1993
(73) Patentinhaber: REICHE & CO., 32791 Lage (DE)
(72) Erfinder: Arnold, Hans, W-4937 Lage (DE); Breuer, Manfred, W-4802 Halle (DE)
(74) Vertreter: Stracke, Alexander, Dipl.-Ing.

(56) Entgegenhaltungen:
- DE-C- 3 801 109
- DE-C- 4 013 695

## Beschreibung

Die Erfindung bezieht sich auf eine Sicherheitsvorrichtung, mit der das dem Fahrer zugewandte, das Lenkrad tragende Ende einer sich durch ein Lagergehäuse erstreckenden Kraftfahrzeuglenksäule während eines starken Frontalunfalls durch Druck- und/oder Zugmittel nach vorne verlagerbar ist.

Sicherheitsvorrichtungen der genannten Art sind aus der US-A-4 884 652 bekannt. Sie dienen dazu, den durch einen Sicherheitsgurt definiert verzögerten Vorverlagerungsweg eines Fahrers zu vergrößern, damit dessen Eigengeschwindigkeit auf einem längeren Weg abgebremst werden kann. Hierdurch, werden geringere und gesundheitsunschädlichere Verzögerungswerte verwirklicht und es wird erreicht, daß der Kopf des Fahrers bei nicht vorhandenem Airbag nicht auf das Lenkrad aufschlägt.

Der Erfindung liegt die Aufgabe zugrunde, eine Sicherheitsvorrichtung der eingangs genannten Art zu schaffen, die nach einem kurzen Ansprechweg die auftretenden Beschleunigungskräfte sicher aufnehmen und alle beteiligten Bauteile nach vorne aus dem Fahrgastraum herausbewegen kann.

Diese Aufgabe wird durch die Merkmale des Patentanspruches 1 gelöst.

Die erfindungsgemäße Sicherheitsvorrichtung kann an feststehenden aber auch an winkel- und längenverstellbaren Lenksäulen Verwendung finden, wobei der Schneidenhalter unmittelbar benachbart der Lenksäule oder des Lagergehäuses angeordnet wird, so daß er berührungsfrei; jedoch in unmittelbarer Nähe der im Crashfall zu bewegenden Bauteile angeordnet ist und diese fast spielfreie Anordnung ein sofortiges Ansprechen ermöglich. Die Schneide des Schneidenhalters erzeugt den Formschluß dagegen erst bei Bedarf, und zwar spielfrei genau dort, wo er benötigt wird.

Der oder die Schnittstempel, die im Schneidenhalter angeordnet sind, sind nicht senkrecht sondern schräg zur einzuschneidenden Oberfläche angeordnet, so daß zum einen zunächst ein punktförmiges Anschneiden mit nachfolgender Vergrößerung der Scherfläche erfolgt. Seitliche Einrißkanten durch plötzliche Überschreitung der Zugfestigkeit des Lenksäulen- oder Lagergehäusematerials wird dadurch vermieden. Nachdem der Formschluß hergestellt ist, liegt die Formteiloberseite großflächig am Lagergehäuse oder an der Lenksäule an, so daß die weiter einwirkenden Druck- oder Zugmittel verlustfrei auf Lagergehäuse und Lenksäule einwirken können. Die Schrägstellung der Schnittstempel hat zum weiteren den Vorteil, Reibungskräfte am Schneidenhalter zu erzeugen, die verhindern, daß der Schnittstempel weiter in diesen hineingedrückt werden kann.

Weitere Ausgestaltungen des Gegenstandes der Erfindung ergeben sich aus den Unteransprüchen.

Nachfolgend ist ein Ausführungsbeispiel der Erfindung anhand der Zeichnungen näher beschrieben.

Es zeigen:

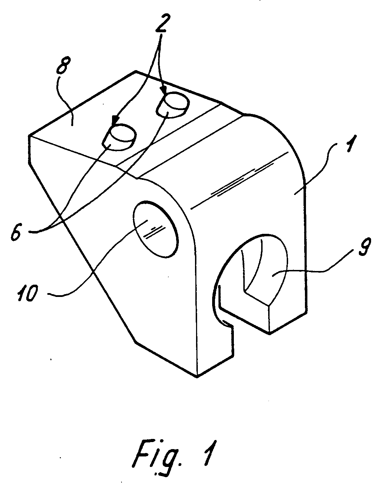

- Fig. 1: einen Schneidenhalter in perspektivischer Darstellung,

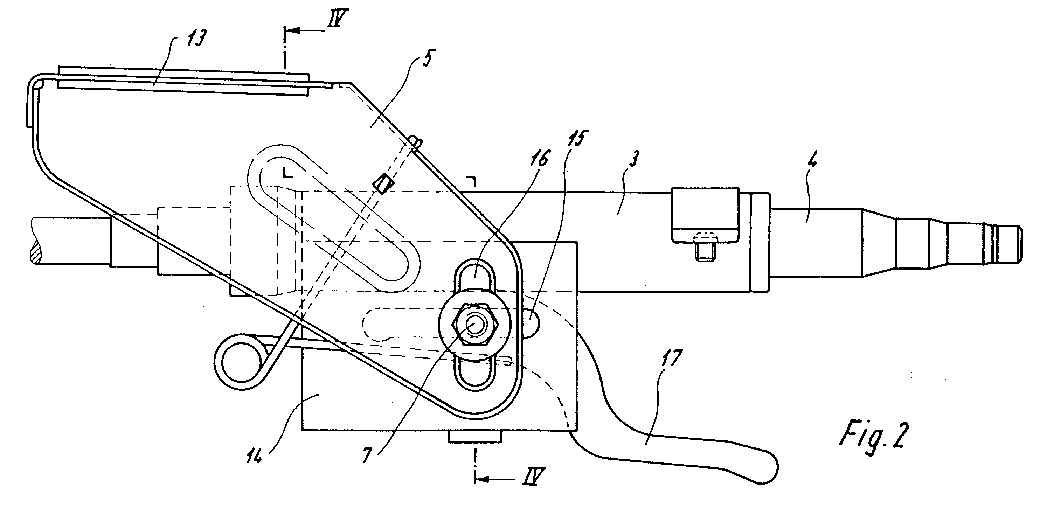

- Fig. 2: eine Einbaulage der Sicherheitsvorrichtung an einer winkel- und längsverstellbaren Lenksäule,

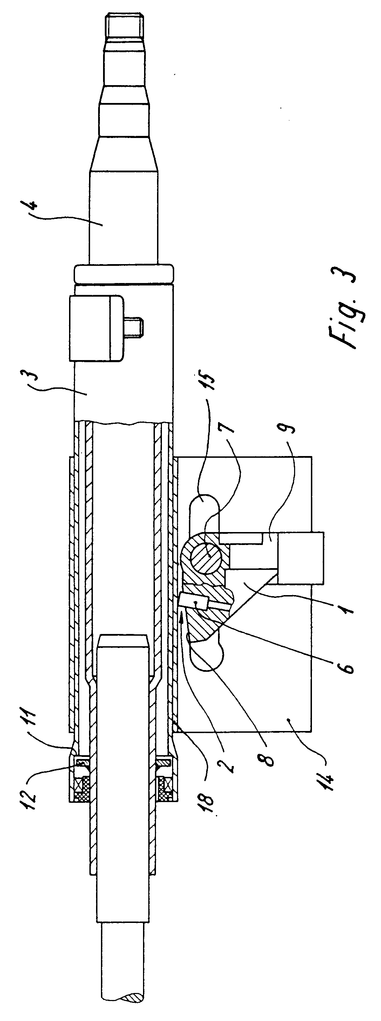

- Fig. 3: eine Schnittdarstellung der Fig. 2,

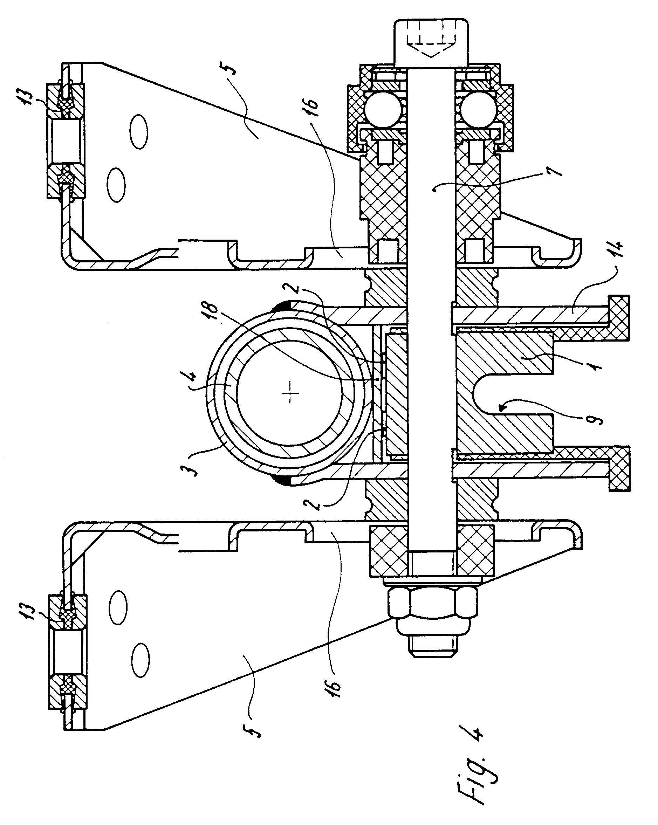

- Fig. 4: einen Schnitt nach der Linie IV-IV in Fig. 2.

Die dargestellte Sicherheitsvorrichtung ist mit in eine Vorrichtung zur Einstellung der Winkellage und der Länge einer Kraftfahrzeuglenksäule zwischen deren verstärkten Vorrichtungswandungen eingebaut.

Die teleskopierbare Lenksäule 4 erstreckt durch das Lagergehäuse 3, an das die zueinander parallelen Vorrichtungswandungen 14 angeschweißt sind. Diese weisen zur Längeneinstellung der Lenksäule 4 achsparallele Langlöcher 15 auf, durch die eine Achse 7 geführt ist, die sich ebenfalls durch dazu senkrechte Langlöcher 16 von fahrzeugfesten Konsolen 5 erstreckt, die zur Winkeleinstellung der Kfz-Lenksäule dienen, wobei auf der Achse 7 ferner ein über einen Klemmhebel 17 bedienbarer Klemmechanismus vorgesehen ist, mit dem eine gewünschte Lenksäulenposition verriegelbar ist.

Der Schneidenhalter 1 ist zwischen den beiden Wandungen 14 auf der Achse 7 gelagert und besteht aus einem auf der Achse 7 verschwenkbaren Formteil. Das Formteil weist an seiner dem einzuschneidenden Gehäuse zugewandten Seite eine großflächige Auflage und zwei aus dieser mit ihren Schneiden 2 hervorstehende Schnittstempel 6 auf. Die Schnittstempel 6 sind zylindrisch ausgeführt und in einem Winkel zur einzuschneidenden Fläche angeordnet, der kleiner ist als 90°, so daß im Einsatzfall zunächst ein punktförmiges Anschneiden erfolgt, und durch die weitere Schwenkbewegung des Schneidenhalters 1 die einzuschneidende Fläche und dementsprechend der Formschluß vergrößert wird.

Die schräge bzw. nicht senkrechte Anordnung der in den Schneidenhalter 1 eingesetzten Schnittstempel 6 zur Zug- oder Druckrichtung der Zug- oder Druckmittel erzeugen eine verstärkte Reibung zwischen Schnittstempel 6 und Schneidenhalter 1, so daß ein Eindrücken des Schnittstempels 6 in den Schneidenhalter 1 wirksam vermieden wird.

Der Schneidenhalter 1 kann aus Metall, Kunststoff oder Verbundwerkstoffen hergestellt sein. Die Schneiden können im Gegensatz zur beschriebenen Ausführungsform auch eingepreßt, angeklebt oder angegossen sein.

Auch der Schnittstempel 6 kann aus unterschiedlichen Materialkomponenten zusammengesetzt sein.

Die Drehachse 7 ist im Bereich der Krafteinleitung in die Vorrichtungswandung 14 abgeflacht, um die auftretenden Kräfte über eine möglichst große Fläche einzuleiten und um festigkeitsübersteigende Materialbeanspruchungen bzw. zu hohe Flächenpressungen zu vermeiden.

Die an dem Schneidenhalter 1 angreifenden Druck- oder Zugmittel können Seile sein. Diese Zug- oder Druckmittel können auch auf andere Weise mechanisch, pyrotechnisch oder hydraulisch ausgebildet sein.

Die im Normalbetrieb fahrzeugfeste Konsole 5 besitzt für den Crashfall Soll-Ausbruchstellen 13, die ab einer vorherbestimmbaren Belastung aus ihrer Fixierung herausreißen.

Durch die vorliegende Erfindung ist gesichert, daß auch bei versehentlich nicht festgelegter Lenkradeinstellung das Lenkrad mitsamt Lenksäule aus dem Fahrgastraum herausgezogen wird.

## Patentansprüche

1. Sicherheitsvorrichtung, mit der das dem Fahrer zugewandte, das Lenkrad tragende Ende einer sich durch ein Lagergehäuse erstreckenden Kraftfahrzeuglenksäule während eines starken Frontalunfalls durch Druck- und/oder Zugmittel nach vorne verlagerbar ist, **dadurch gekennzeichnet,** daß die Zug- und/oder Druckmittel einem in der Nähe der Lenkäuse (4) oder des Lagergehäuses (3) benachbart angeordneten, schwenkbar gelagerten Schneidenhalter (1) zugeordnet sind, der mindestens einen mit einer Schneide (2) versehenen Schnittstempel (6) aufweist, wobei im Crashfall die Schneide (2) in das Lagergehäuse (3) oder die Lenksäule (4) eindringt und eine formschlüssige Verbindung herstellt.

2. Sicherheitsvorrichtung nach Anspruch 1, dadurch gekennzeichnet, daß der Schnittstempel (6) zylindrisch ist.

3. Sicherheitsvorrichtung nach Anspruch 2, dadurch gekennzeichnet, daß der Schnittstempel (6) unter einem Einschnittwinkel kleiner als 90° zur einzuschneidenden Kontaktfläche (18) schräg im Schneidenhalter (1) angeordnet ist.

4. Sicherheitsvorrichtung nach einem der Ansprüche 1 bis 3, dadurch gekennzeichnet, daß sie zwei Schnittstempel (6) aufweist.

## Claims

1. A safety device with which the end of a motor vehicle steering column which extends through a support housing, which end is towards the driver and carries the steering wheel, is displaceable forwardly by pressure and/or tensile means during a severe frontal accident, characterised in that the tensile and/or pressure means are associated with a pivotably mounted cutting edge holder (1) which is arranged in adjacent relationship in the vicinity of the steering column (4) or the support housing (3) and which has at least one cutting punch (6) provided with a cutting edge (2), wherein in a crash situation the cutting edge (2) penetrates into the support, housing (3) or the steering column (4) and produces a positively locking connection.

2. A safety device according to claim 1 characterised in that the cutting punch (6) is cylindrical.

3. A safety device according to claim 2 characterised in that the cutting punch (6) is arranged in the cutting edge holder (1) inclinedly at a cutting-in angle of less than 90° relative to the contact surface (18) to be cut into.

4. A safety device according to one of claims 1 to 3 characterised in that it has two cutting punches (6).

## Revendications

1. Dispositif de sécurité, avec lequel l'extrémité portant le volant et tournée vers le conducteur d'une colonne de direction s'étendant à travers un logement de palier peut se déplacer vers l'avant lors d'un accident frontal grave, à l'aide de moyens de poussée et/ou de traction, caractérisé en ce que les moyens de traction et/ou de poussée sont associés à un support de lame (1) placé à proximité de la colonne de direction (4) ou du logement de palier (3) et monté de manière pivotante, qui présente au moins un poinçon (6) muni d'une lame (2), la lame (2) pénétrant en cas de choc dans le logement de palier (3) ou dans la colonne de direction (4) et réalisant un assemblage à engagement positif.

2. Dispositif de sécurité selon la revendication 1, caractérisé en ce que le poinçon (6) est cylindrique.

3. Dispositif de sécurité selon la revendication 2, caractérisé en ce que le poinçon (6) est disposé à l'oblique dans le support de lame (1), selon un angle d'attaque inférieur à 90° par rapport à la surface de contact (18) à découper.

4. Dispositif de sécurité selon l'une des revendications 1 à 3, caractérisé en ce qu'il présente deux poinçons (6).
